# EUROPÄISCHE PATENTSCHRIFT

(11) **EP 2 954 291 B1**
(45) Veröffentlichungstag und Bekanntmachung des Hinweises auf die Patenterteilung: **24.10.2018**
(21) Anmeldenummer: 14703257.7
(22) Anmeldetag: 23.01.2014
(51) Int. Cl.: G01D 11/30, G01D 5/244, G01D 5/347, F16D 1/072, F16D 3/68, F16C 3/02, F16D 1/068, F16D 1/076, F16C 41/00

(54) **SENSORANORDNUNG ZUR ERFASSUNG DER WINKELSTELLUNG EINER WELLE UND VERFAHREN ZUM VERBINDEN EINER SENSORANORDNUNG**
SENSOR ARRANGEMENT FOR DETECTING THE ANGULAR POSITION OF A SHAFT AND METHOD FOR CONNECTING A SENSOR ARRANGEMENT
ENSEMBLE DE DÉTECTION POUR CAPTER LA POSITION ANGULAIRE D'UN ARBRE ET PROCÉDÉ DE RACCORDEMENT D'UN ENSEMBLE DE DÉTECTION

(30) Priorität: 07.02.2013 DE 102013002049
(43) Veröffentlichungstag der Anmeldung: 16.12.2015
(73) Patentinhaber: Sew-Eurodrive GmbH & Co. KG, 76646 Bruchsal (DE)
(72) Erfinder: WÖPPERMANN, Markus, 76307 Karlsbad (DE)
(86) Internationale Anmeldenummer: PCT/EP2014/000167
(87) Internationale Veröffentlichungsnummer: WO 2014/121894

(56) Entgegenhaltungen:
- EP-A1- 1 518 769
- EP-A1- 1 541 983
- EP-A2- 0 303 399
- DE-A1- 10 006 223
- DE-A1- 10 236 560
- DE-A1- 10 323 169
- GB-A- 2 051 353
- JP-A- S61 204 513

## Beschreibung

Die Erfindung betrifft eine Sensoranordnung und ein Verfahren zum Verbinden einer Sensoranordnung.
Aus der DE 10 2005 009 601 A1 ist eine Sensoranordnung zur Erfassung der Winkelstellung einer Welle bekannt.
**In der** DE 100 06 223 A1 **ist ein Verfahren und eine Vorrichtung zum Befestigen von Drehzahlmessern gezeigt.**

**Die** EP 1 518 769 A1 **zeigt ein Kontrollsystem für ein Fahrzeug.**
**Aus der** EP 0 303 399 A2 **ist eine Kupplung für ein lineares Wegmessgerät bekannt.**
**Die** EP 1 541 983 A1 **zeigt eine Vorrichtung zum Messen von Drehwinkel und Drehmoment.**
**In der** DE 103 23 169 A1 **ist eine Vorrichtung zum Verbinden von Maschinenteilen gezeigt.**

**Die** JP S61 204513 A **zeigt ein Messinstrument mit Drehscheibe.**
**Aus der** GB 2 051 353 A **ist ein inkrementaler Drehgeber bekannt.**

**In der** DE 102 36 560 A1 **ist ein Mehrfach-Umdrehungszähler und ein Verfahren zu dessen Montage gezeigt.**

Der Erfindung liegt daher die Aufgabe zugrunde, eine Sensoranordnung und ein Verfahren zum Verbinden einer Sensoranordnung mit einer Welle weiterzubilden, wobei die Sicherheit verbessert werden soll.

Erfindungsgemäß wird die Aufgabe bei der Sensoranordnung nach den in Anspruch 1 angegebenen Merkmalen und bei dem Verfahren nach den in Anspruch 15 angegebenen Merkmalen gelöst.

Wichtige Merkmale der Erfindung bei der Sensoranordnung, insbesondere zur Erfassung der Winkelstellung einer Welle, sind, dass
eine Sensorwelle mittels einer Kupplung mit einer Kupplungswelle verbunden ist,
wobei die Kupplungswelle mit der Welle verbunden ist, insbesondere schraubverbunden ist,
wobei die Kupplungswelle in einem ersten axialen Abschnitt einen Gewindeabschnitt und in einem zweiten axialen Abschnitt eine Fase aufweist.

Von Vorteil ist dabei, dass die Sensorwelle direkt mit der Welle verbindbar ist, somit ist eine einfache und sichere Erfassung der Winkelstellung der Welle ermöglicht. Es ist ein einfacher kostengünstiger Sensor einsetzbar zur Erfassung der Winkelstellung.

Dabei ist die Teileanzahl der Sensoranordnung reduzierbar. Die Verbindung der Kupplungswelle mit der Welle erfolgt vorteilhafterweise ohne zusätzliches Kupplungsteil, da die Kupplungswelle direkt in die Welle einschraubbar ist.

Somit ist auch die Sicherheit verbessert, weil die Welle und die Kupplungswelle drehfest und spielfrei miteinander verbindbar sind.

Bei einer vorteilhaften Ausgestaltung sind der Gewindeabschnitt und die Fase axial voneinander beabstandet. Von Vorteil ist dabei, dass der Gewindeabschnitt in die Welle einschraubbar ist und die Kupplungswelle mittels der Fase zur Drehachse der Welle ausrichtbar ist. Mittels der Beabstandung ist eine Verformung der Kupplungswelle zwischen dem Gewindeabschnitt und der Fase ermöglicht, so dass der Gewindeabschnitt nicht oder nur geringfügig verformt wird. Somit ist also die Sicherheit der Schraubverbindung mit dem Gewindeabschnitt verbesserbar.
Bei einer vorteilhaften Ausgestaltung ist der Gewindeabschnitt an dem von der Sensorwelle abgewandten axialen Endbereich der Kupplungswelle angeordnet. Von Vorteil ist dabei, dass die Kupplungswelle kompakt ausführbar ist. Somit ist der Materialaufwand reduzierbar und der Umweltschutz verbesserbar.
Bei einer vorteilhaften Ausgestaltung grenzt eine Einfädelfase an den Gewindeabschnitt auf der von der Sensorwelle abgewandten Seite an. Von Vorteil ist dabei, dass die Kupplungswelle in einfacher Weise in die Bohrung in der Welle einführbar ist mittels der Einfädelfase, somit ist die Fertigung der Sensoranordnung vereinfachbar.

Erfindungsgemäß ist ein Ausgleichsabschnitt axial zwischen dem Gewindeabschnitt und der Fase angeordnet, wobei der minimale Radius des Ausgleichsabschnitts kleiner ist als der minimale Radius des Gewindeabschnitts, und wobei der minimale Radius des Ausgleichsabschnitts kleiner ist als der minimale Radius der Fase. Von Vorteil ist dabei, dass ein im Vergleich zum Gewindeabschnitt und der Fase dünnerer Ausgleichsabschnitt leichter verformbar ist als die dickeren Abschnitt, insbesondere elastisch verformbar.
Dabei verformt sich die Kupplungswelle beim Ausrichten zur Drehachse also bevorzugterweise in dem Ausgleichsabschnitt, so dass der Gewindeabschnitt und die Fase deutlich geringer verformt werden als der Ausgleichsabschnitt. Dieser Effekt ermöglicht eine sichere Verbindung der Kupplungswelle mit der Welle bei zuverlässiger Ausrichtung der Kupplungswellenachse zur Drehachse der Welle.

Erfindungsgemäß berührt die Fase der Kupplungswelle eine Bohrung in der Welle, insbesondere wobei die Fase der Kupplungswelle zumindest teilweise an einer Fase der Bohrung anliegt, wobei die Bohrung einen Gegengewindeabschnitt, insbesondere einen Innengewindeabschnitt, aufweist, welcher mit dem Gewindeabschnitt, insbesondere einem Außengewindeabschnitt, schraubverbunden ist, insbesondere wobei das Außengewinde in das Innengewinde eingeschraubt ist. Von Vorteil ist dabei, dass die Kupplungswelle in einfacher und zuverlässiger Art und Weise zur Drehachse der Welle ausrichtbar ist.
Beim Einschrauben des Gewindeabschnitts in den Gegengewindeabschnitt werden die Fasen zunehmend aneinander angenähert und die Ausrichtung der Fase der Kupplungswelle zunehmend an die Fase der Bohrung angepasst, währenddessen der Ausgleichsabschnitt verformt wird. Somit ist eine mit dem Einschrauben zunehmende Verformung des Ausgleichsabschnitts ermöglicht, welche im Vergleich zu einer ruckartigen Verformung, beispielsweise mittels Hammerschlägen, vorteilhaft ist, da Druckspannungsspitzen in der Kupplungswelle reduzierbar sind. Somit ist die Dauerfestigkeit der Kupplungswelle verbesserbar.

Erfindungsgemäß ist der Ausgleichsabschnitt mit Zugspannung beaufschlagt. Von Vorteil ist dabei, dass die Verbindung der Kupplungswelle mit der Welle selbsthemmend ausführbar ist. Somit ist die Betriebssicherheit der Sensoranordnung verbesserbar, da die Kupplungswelle sicher mit der Welle verbindbar ist.
Dabei wird die Zugspannung durch das Einschrauben in die Welle eingebracht. Diese Zugspannung verstärkt die Verbindung der Kupplungswelle mit der Welle, da sie beim Lösen der Schraubverbindung zu überwinden ist.

Bei einer vorteilhaften Ausgestaltung ist in der Bohrung Klebstoff angeordnet, insbesondere im Schraubverbindungsbereich. Von Vorteil ist dabei, dass die Sicherheit der Verbindung der Kupplungswelle mit der Welle weiter verbesserbar ist, da der Klebstoff nach dem Einschrauben des Gewindeabschnitts in den Gegengewindeabschnitt aushärtet und ein Lösen der Schraubverbindung erschwert.
Bei einer vorteilhaften Ausgestaltung ist axial zwischen dem Gewindeabschnitt und der Kupplung der Ausgleichsabschnitt der Kupplungswellenabschnitt mit dem kleinsten minimalen Radius. Von Vorteil ist dabei, dass die gewollte Verformung der Kupplungswelle während des Einschraubens in die Welle weitestgehend auf den Ausgleichsabschnitt begrenzbar ist. Die anderen Abschnitte weisen eine höhere Steifigkeit auf als der Ausgleichsabschnitt, so dass das Risiko einer weiteren Verformung während des Betriebs des Sensors reduzierbar ist.

Bei einer vorteilhaften Ausgestaltung fungiert der Gewindeabschnitt als Drehmomenteinleitungsmittel für die Einleitung eines Drehmoments der Welle in die Kupplungswelle, wobei der Kupplungsaufnahmeabschnitt als Drehmomentausleitungsmittel fungiert für die Ausleitung des Drehmoments aus der Kupplungswelle in die Sensorwelle, wobei der Ausgleichsabschnitt und/oder die Fase axial zwischen der Drehmomenteinleitung und der Drehmomentausleitung angeordnet sind. Von Vorteil ist dabei, dass das Drehmoment der Welle mittels der Sensorwelle messbar und überwachbar ist.

Bei einer vorteilhaften Ausgestaltung ist der minimale Radius des Ausgleichsabschnitts kleiner ist als die Radien aller anderen axial zwischen dem Drehmomenteinleitungsmittel und dem Drehmomentausleitungsmittel angeordneten Abschnitte, insbesondere Axialabschnitte, der Kupplungswelle. Von Vorteil ist dabei, dass der Ausgleichsabschnitt eine höhere Verformbarkeit aufweist als die anderen Abschnitte der Kupplungswelle.

Bei einer vorteilhaften Ausgestaltung weist die Kupplungswelle in axialer Richtung angrenzend an die Fase einen Werkzeugaufnahmeabschnitt auf, insbesondere wobei die Fase axial zwischen dem Werkzeugaufnahmeabschnitt und dem Ausgleichsabschnitt angeordnet ist. Von Vorteil ist dabei, dass die Kupplungswelle mittels eines an dem Werkzeugaufnahmeabschnitt angreifenden Werkzeugs in die Bohrung einschraubbar ist. Ein im Vergleich zum Abstand zwischen der Fase und dem Gewindeabschnitt geringer Abstand zwischen dem Werkzeugabschnitt und der Fase verbessert die Torsionssteifigkeit der Kupplungswelle beim Einschrauben in die Welle.

Bei einer vorteilhaften Ausgestaltung ist der minimale Radius des Werkzeugaufnahmeabschnitts größer ist als der maximale Radius des Gewindeabschnitts. Von Vorteil ist dabei, dass der Werkzeugaufnahmeabschnitt steifer als der Gewindeabschnitt ausführbar ist.

Bei einer vorteilhaften Ausgestaltung ist der Werkzeugaufnahmeabschnitt außerhalb der Bohrung angeordnet. Von Vorteil ist dabei, dass der Werkzeugaufnahmeabschnitt in einfacher Art und Weise mit einem Werkzeug in Eingriff bringbar und/oder bedienbar ist.

Vorteilhafterweise ist der Werkzeugaufnahmeabschnitt in axialer Richtung beabstandet von der Bohrung angeordnet. Somit ist ein Verklemmen des Werkzeugs mit der Welle beim Einschrauben verhinderbar.

Bei einer vorteilhaften Ausgestaltung weist die Kupplungswelle einen Laufflächenabschnitt für einen Wellendichtring und/oder einen Freistich auf. Von Vorteil ist dabei, dass die Kupplungswelle mittels des Laufflächenabschnitts und eines Wellendichtringes abdichtbar ist zum Plattenteil.

Bei einer vorteilhaften Ausgestaltung ist der Laufflächenabschnitt axial zwischen dem Werkzeugaufnahmeabschnitt und dem Kupplungsaufnahmeabschnitt angeordnet ist. Von Vorteil ist dabei, dass die Kupplungswelle sicher abdichtbar ist zum Plattenteil.

Bei einer vorteilhaften Ausgestaltung ist der Freistich axial zwischen dem Werkzeugaufnahmeabschnitt und dem Laufflächenabschnitt angeordnet ist. Von Vorteil ist dabei, dass der Werkzeugaufnahmeabschnitt und der Laufflächenabschnitt in einfacher Art und Weise fertigbar sind.

Bei einer vorteilhaften Ausgestaltung ist der minimale Radius des Ausgleichsabschnitts kleiner als der minimale Radius des Werkzeugaufnahmeabschnitts. Von Vorteil ist dabei, dass der Ausgleichsabschnitt eine bessere Verformbarkeit aufweist als der Werkzeugaufnahmeabschnitt.

Bei einer vorteilhaften Ausgestaltung ist der minimale Radius des Ausgleichsabschnitts kleiner als der minimale Radius des Laufflächenabschnitts. Von Vorteil ist dabei, dass der Laufflächenabschnitt eine größere Torsionssteifigkeit aufweist als der Ausgleichsabschnitt. Bei einer vorteilhaften Ausgestaltung ist der minimale Radius des Ausgleichsabschnitts kleiner als der minimale Radius des Freistichs. Von Vorteil ist dabei, dass die Kerbwirkung des Freistichs reduzierbar ist.

Bei einer vorteilhaften Ausgestaltung ist der minimale Radius des Ausgleichsabschnitts kleiner als der minimale Radius des Kupplungsaufnahmeabschnitts. Von Vorteil ist dabei, dass der Kupplungsaufnahmeabschnitt eine größere Torsionssteifigkeit aufweist als der Ausgleichsabschnitt.

Bei einer vorteilhaften Ausgestaltung ist axial zwischen dem Ausgleichsabschnitt und der Fase ein Übergangsbereich angeordnet, wobei der Übergangsbereich einen gerundeten Verlauf des Durchmessers als Funktion der axialen Länge aufweist. Von Vorteil ist dabei, dass mittels eines gerundeten Übergangsbereichs die Kerbwirkung im Übergangsbereich reduzierbar ist, so dass die mechanische Belastbarkeit der Kupplungswelle verbesserbar ist.

Bei einer vorteilhaften Ausgestaltung weist der Übergangsbereich einen radialen, elliptischen oder polynomialen Verlauf des Durchmessers als Funktion der axialen Länge auf. Von Vorteil ist dabei, dass ein radialer Verlauf in einfacher Art und Weise fertigbar ist. Ein elliptischer Übergang reduziert die Kerbwirkung im Übergangsbereich. Mittels eines polynomialen Verlaufs ist die Kerbwirkung weiter verbesserbar, wobei ein polynomialer Verlauf aufwändiger zu fertigen ist.

Bei einer vorteilhaften Ausgestaltung ist ein Sensorgehäuse mittels zumindest eines ersten Verbindungsmittels mit einem Flanschteil verbunden, insbesondere schraubverbunden, wobei das Flanschteil eine Bohrung aufweist zur Hindurchführung der Sensorwelle. Von Vorteil ist dabei, dass verschiedene Sensoren mit unterschiedlichen Sensorgehäusen verwendbar sind in der Sensoranordnung. Mittels Auswahl eines für den jeweiligen Sensor geeigneten Flanschteils ist der Sensor einfach austauschbar.

Bei einer vorteilhaften Ausgestaltung ist das Flanschteil mittels zumindest eines zweiten Verbindungsmittels mit einem Gehäuseteil verbunden, insbesondere schraubverbunden, wobei das Gehäuseteil wellenseitig eine Bohrung aufweist zur Hindurchführung der Kupplungswelle. Von Vorteil ist dabei, dass das Gehäuseteil zumindest teilweise verschließbar ist mit dem Flanschteil. Die Verbindung des Gehäuseteils mit dem Flanschteil ist in einfacher Art und Weise ausführbar.

Bei einer vorteilhaften Ausgestaltung umgibt das Gehäuseteil die Kupplung zumindest teilweise gehäusebildend. Von Vorteil ist dabei, dass die Kupplung in dem Gehäuseteil geschützt vor äußeren Einflüssen anordenbar ist.

Bei einer vorteilhaften Ausgestaltung ist das Gehäuseteil mittels zumindest eines dritten Verbindungsmittels mit einem Plattenteil verbunden, insbesondere schraubverbunden, wobei axial zwischen dem Plattenteil und dem Gehäuseteil ein Deckelteil angeordnet ist, insbesondere wobei das Plattenteil und/oder das Gehäuseteil und/oder das Deckelteil eine Bohrung aufweist zur Hindurchführung der Kupplungswelle. Von Vorteil ist dabei, dass das Plattenteil in einfacher Art und Weise mit dem Deckelteil verbindbar ist.

Bei einer vorteilhaften Ausgestaltung ist die Bohrung in dem Deckelteil derart groß ausgeführt, dass die Kupplungswelle und das oder alle dritten Verbindungsmittel hindurchführbar sind durch die Bohrung, insbesondere wobei Spiel vorgesehen ist zwischen der Bohrung und dem oder den dritten Verbindungsmitteln. Von Vorteil ist dabei, dass das Plattenteil und das Gehäuseteil verschiebbar sind relativ zum Deckelteil, so dass sie in einfacher Art und Weise ausrichtbar sind zu der Kupplungswelle.

Bei einer vorteilhaften Ausgestaltung weist das Plattenteil wellenseitig einen Wellendichtring, insbesondere Radialwellendichtring, auf. Von Vorteil ist dabei, dass das Plattenteil zu der Kupplungswelle abdichtbar ist mittels des Wellendichtrings.

Bei einer vorteilhaften Ausgestaltung weist der Wellendichtring eine Dichtlippe auf, insbesondere wobei die Dichtlippe auf dem Laufflächenabschnitt läuft. Von Vorteil ist dabei, dass eine Abdichtung des Plattenteils zur Kupplungswelle in einfacher Art und Weise ausführbar ist mittels eines kostengünstigen Wellendichtrings.

Bei einer vorteilhaften Ausgestaltung ist zwischen dem Plattenteil und dem Deckelteil ein Dichtring angeordnet. Von Vorteil ist dabei, dass das Plattenteil zum Deckelteil hin abdichtbar ist. Somit ist also auch die Kupplungswelle mittels des Wellendichtrings, des Dichtrings und des Plattenteils abdichtbar zum Deckelteil.

Vorteilhafterweise ist das Deckelteil ebenfalls abdichtbar zum Gehäuse hin. Somit ist die mit der Welle, die im Inneren des Gehäuses angeordnet ist, verbindbare Kupplungswelle abdichtbar zum Gehäuse hin. Dadurch ist die Betriebssicherheit eines das Gehäuse aufweisenden Getriebes verbesserbar, da das in dem Gehäuse angeordnete Getriebeschmiermittel schützbar ist vor Verunreinigungen.
Bei einer vorteilhaften Ausgestaltung ist das Deckelteil in einer Bohrung mit einer Lageranordnung zur Lagerung der Welle angeordnet. Von Vorteil ist dabei, dass die Lageranordnung abdichtbar ist mittels des Deckelteils.
Bei einer vorteilhaften Ausgestaltung fungiert zumindest ein erstes, zweites und/oder drittes Verbindungsmittel als Drehmomentstütze. Von Vorteil ist dabei, dass zusätzliche Drehmomentstützen einsparbar sind. Somit ist die Anzahl der Bauteile reduzierbar und die Sensoranordnung ist kostengünstig herstellbar.
Wichtige Merkmale der Erfindung bei dem Verfahren zum Verbinden einer Sensoranordnung zur Erfassung der Winkelstellung einer Welle mit der Welle sind die folgenden Verfahrensschritte:
- in einem ersten Verfahrensschritt wird ein Plattenteil mittels eines dritten Verbindungsmittels mit einem Gehäuseteil spielbehaftet verbunden, wobei ein Deckelteil zwischen dem Plattenteil und dem Gehäuseteil mit einer ersten Klemmkraft eingeklemmt wird,
- in einem zweiten Verfahrensschritt wird das Deckelteil in eine Bohrung eines Gehäuses eingepresst, wobei eine drehfest mit der Welle verbundene Kupplungswelle durch eine in dem Deckelteil ausgeführte Ausnehmung und durch eine in dem Plattenteil ausgeführte Ausnehmung und durch eine in dem Gehäuseteil ausgeführte Ausnehmung hindurchgeführt wird,
- in einem dritten Verfahrensschritt werden das miteinander spielbehaftet verbundene Plattenteil und Gehäuseteil relativ zum Deckelteil verschoben und mittels eines Montagehilfsmittels zur Drehachse ausgerichtet,
- in einem vierten Verfahrensschritt wird das Plattenteil mit dem Gehäuseteil verbunden, wobei das Deckelteil mit einer zweiten Klemmkraft eingeklemmt wird, wobei der zweite Klemmkraftbetrag größer ist als der erste Klemmkraftbetrag,
- in einem fünften Verfahrensschritt wird ein Sensorgehäuse mit einem Flanschabschnitt mittels zumindest eines ersten Verbindungsmittels verbunden,
- in einem sechsten Verfahrensschritt wird eine Kupplung mit einem Kupplungsaufnahmeabschnitt der Kupplungswelle und mit einer Sensorwelle verbunden,
- in einem siebten Verfahrensschritt wird der Flanschabschnitt mit dem Gehäuseteil mittels zumindest eines zweiten Verbindungsmittels verbunden.
Von Vorteil ist dabei, dass mittels des beschriebenen Verfahrens das Gehäuseteil und die mit dem Gehäuseteil verbundene Sensorwelle in einfacher Art und Weise ausrichtbar sind zur Drehachse der Welle. Die verwendeten Bauteile und das Montagehilfsmittel sind mit verschiedenen Sensoren verwendbar.
Des Weiteren ist die Sicherheit verbessert, da die Kupplungswelle vollständig innerhalb des Gehäuses beziehungsweise eines Kupplungsgehäuses angeordnet ist. Somit ist das Verletzungsrisiko des Benutzers reduzierbar.

Weitere Vorteile ergeben sich aus den abhängigen Ansprüchen.

Die Erfindung wird nun anhand von Abbildungen näher erläutert:
In der Figur 1 ist eine erfindungsgemäße Sensoranordnung in Schnittansicht gezeichnet.
Figur 2 zeigt eine Kupplungswelle der erfindungsgemäßen Sensoranordnung.

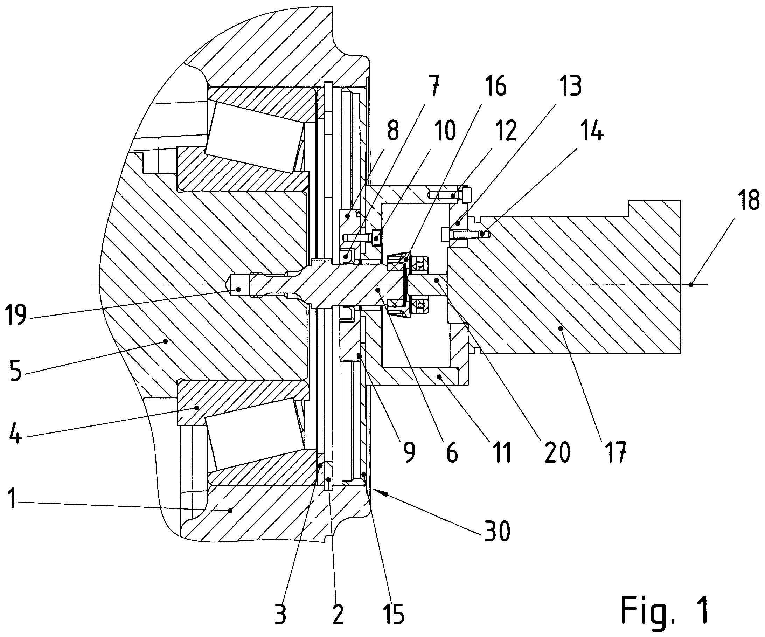

Die in Figur 1 dargestellte Sensoranordnung zur Erfassung der Winkelstellung einer Welle 5 weist die Welle 5, beispielsweise eine Welle 5 eines Getriebes, eine Kupplungswelle 6, eine Kupplung 16 und einen Sensor mit einem Sensorgehäuse 17 und einer Sensorwelle 20 auf.

Die Welle 5 ist mittels eines Lagers 4 in einem Gehäuse 1, beispielsweise ein Getriebegehäuse, gelagert. Das Lager 4 ist in einer Stufenbohrung in dem Gehäuse 1 angeordnet. In axialer Richtung ist das Lager 4 mittels eines Sicherungsrings 2, der in der Stufenbohrung angeordnet ist, begrenzt. Zwischen dem Lager 4 und dem Sicherungsring 2 ist in axialer Richtung ein Distanzring 3 angeordnet. Der axial von der Welle 5 abgewandte Endbereich der Stufenbohrung ist mit einem Deckelteil 15 kraftschlüssig verbunden.

Hierbei definiert die Drehachse 18 der Welle 5 die axiale Richtung.

Die Welle 5 weist eine axiale Bohrung 19 auf. Dabei ist die Bohrung 19 als Sacklochbohrung mit einem Innengewinde ausgeführt, also als Gewindesacklochbohrung ausgeführt. Das offene Ende der Bohrung 19 weist eine zur Drehachse 18 zentrierte Fase auf. Der Innendurchmesser der Bohrung 19 nimmt also in einem Endbereich der Bohrung 19 linear zu.

Die Kupplungswelle 6 ist in die Bohrung 19 in der Welle 5 einschraubbar. Dazu weist die Kupplungswelle 6 an ihrem der Welle 5 zugewandten Endbereich einen Gewindeabschnitt 21 auf, der ein Außengewinde aufweist. Mittels einer am Wellenumfang der Kupplungswelle 6 ausgeführten und von dem Gewindeabschnitt 21 axial beabstandeten Fase 23 ist die Kupplungswelle an der Fase der Bohrung 19 ausrichtbar. Dazu ist der minimale Außendurchmesser der Fase 23 in der Kupplungswelle 6 kleiner als der maximale Innendurchmesser der Fase in der Bohrung 19.

Die Stufenbohrung in dem Gehäuse 1 ist auf ihrer von der Welle 5 abgewandten Seite mittels eines Deckelteils 15 zumindest teilweise verschlossen. Dazu ist das Deckelteil 15 kraftschlüssig mit dem Gehäuse 1 verbunden. Das Deckelteil 15 ist als Blechteil ausgeführt, insbesondere als Stahlblechteil, vorzugsweise als Stanzbiegeteil. Das Deckelteil 15 ist zumindest teilweise mit Kunststoff beschichtet. Vorzugsweise wird als Kunststoff ein Elastomer verwendet. Vorzugsweise ist das Blechteil genauso dick bis viermal so dick wie die Kunststoffbeschichtung, vorzugsweise doppelt so dick wie die Kunststoffbeschichtung. Bei einer bevorzugten Ausführung ist das Blechteil zirka 1 mm dick und die Kunststoffbeschichtung ist zirka 0,5 mm dick.

Das Deckelteil 15 ist topfförmig ausgeführt mit einem Bodenabschnitt und einem Wandabschnitt. Die Wandstärke des Wandabschnitts steigt zum Bodenabschnitt hin monoton an. Dabei nimmt der Innendurchmesser des Wandabschnitts stufenartig ab, vorzugsweise mittels einer einzigen Stufe. Ein dem Lager zugewandter Endbereich des Außendurchmessers des Wandabschnitts weist eine Fase auf. Der Außenradius des Wandabschnitts ist konstant und nimmt im Endbereich zur Welle hin linear ab.

Die dem Gehäuse 1 zugewandte Seite des Wandabschnitts ist mit Kunststoff beschichtet. Dabei ist der Kunststoff zwischen dem Gehäuse 1 und dem Blechteil des Deckelteils 15 angeordnet. Die vom Gehäuse 1 abgewandte Seite des Deckelabschnitts ist ebenfalls mit Kunststoff beschichtet.

Die Stufenbohrung umfasst eine Stufe 30 und eine Fase. Dabei ist die Stufe 30 in einem Axialpositionsbereich der Stufenbohrung vorgesehen, der die Fase umfasst. Vorzugsweise ist also der Axialpositionsbereich der Stufe 30 von der Fase teilweise überdeckt.

Beim Einsetzen des Deckelteils 15 in die Stufenbohrung wird also das Deckelteil 15 in die Stufenbohrung gedrückt. Dabei wird das Deckelteil mittels eines Werkzeugs so eingedrückt, dass ein Oberflächenabschnitt der Außenseite des Deckelteils 15 bündig an die Stufe 30 anschließt. Somit liegen die Stufe 30 und dieser Oberflächenabschnitt des Deckelteils 15 in einer Ebene.

Der gefaste Endbereich der Wandung des Deckelteils wird in die Stufenbohrung eingefädelt und dabei die Wandung des Deckelteils 15 elastisch verformt, so dass ein Kraftschluss entsteht zwischen dem Deckelteil 15 und dem Gehäuse 1. Die Kunststoffbeschichtung des Deckelteils wird ebenfalls elastisch verformt und wirkt als Dichtung zum Gehäuse 1 hin.

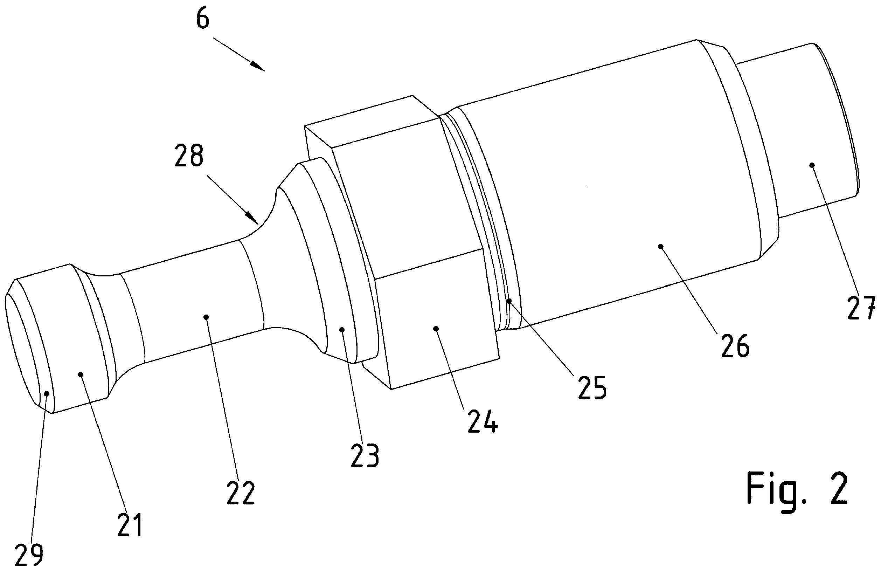

Figur 2 zeigt die Kupplungswelle 6 im Detail. Die Kupplungswelle ist als Rotationskörper ausgeführt. Axial zwischen dem Gewindeabschnitt 21 und der Fase 23 ist ein Ausgleichsabschnitt 22 angeordnet. Der minimale Wellendurchmesser des Ausgleichsabschnitts 22 ist dabei kleiner als der minimale Wellendurchmesser des Gewindeabschnitts 21 und kleiner als der minimale Wellendurchmesser der Fase 23. Vorzugsweise ist der minimale Wellendurchmesser des Ausgleichsabschnitts 22 kleiner als der minimale Wellendurchmesser aller anderen Wellenabschnitte der Kupplungswelle 6.

Ein Übergangsbereich 28 vom Ausgleichsabschnitt 22 zur Fase 23 ist gerundet ausgeführt. Dabei ist der Übergangsbereich 28 vorzugsweise elliptisch ausgeführt. Der Übergangsbereich 28 weist also einen elliptischen Verlauf des Durchmessers als Funktion seiner axialen Länge auf.

Auf der von dem Ausgleichsabschnitt 22 abgewandten axialen Seite der Fase 23 ist ein Werkzeugaufnahmeabschnitt 24 angeordnet. Dieser Werkzeugaufnahmeabschnitt 24 weist vorzugsweise eine mehrkantige Außenkontur auf, insbesondere ist der Werkzeugaufnahmeabschnitt 24 als Außensechskant ausgeführt. Somit ist ein Schraubenschlüssel auf den Werkzeugaufnahmeabschnitt 24 aufsteckbar. Dabei ist der minimale Wellendurchmesser des Werkzeugaufnahmeabschnitts 24 größer als der maximale Wellendurchmesser des Gewindeabschnitts 21.

Beim Einschrauben der Kupplungswelle 6 in die Bohrung 19 der Welle 5 wird der Ausgleichsabschnitt 22 mit Zugspannung beaufschlagt. Dabei ist der maximale axiale Abstand zwischen der Fase 23 und dem Gewindeabschnitt 21 der Kupplungswelle 6 kleiner als der maximale axiale Abstand zwischen dem Innengewinde und der Fase der Bohrung 19. Vorzugsweise ist die Tiefe der Bohrung 19 größer als der Abstand des Wellenendes der Kupplungswelle 6 zur Fase 23. Somit ist bei eingeschraubter Kupplungswelle 6 ein Hohlraum ausgebildet in der Bohrung 19.

Dazu wird mittels des Schraubenschlüssels die Kupplungswelle 6 in die Bohrung eingeschraubt und die Zugspannung in den Ausgleichsabschnitt 22 eingebracht.

Auf der von der Welle 5 abgewandten axialen Seite des Werkzeugaufnahmeabschnitts 24 ist ein Laufflächenabschnitt 26 angeordnet. Der Laufflächenabschnitt 26 ist zylindrisch ausgeführt und weist eine glatte Oberfläche auf, vorzugsweise ist der Laufflächenabschnitt 26 drallfrei ausgeführt. Zwischen dem Laufflächenabschnitt 26 und dem Werkzeugaufnahmeabschnitt 24 ist ein Freistich 25 ausgeformt.

Das von der Welle 5 abgewandte Ende der Kupplungswelle 6 ist als Kupplungsaufnahmeabschnitt 27 ausgeführt. Dabei ist der Wellendurchmesser des Kupplungsaufnahmeabschnitts 27 kleiner als der Wellendurchmesser des Laufflächenabschnitts 26. Vorzugsweise fungiert der Übergangsbereich zwischen dem Kupplungsaufnahmeabschnitt 27 und dem Laufflächenabschnitt 26 als Anschlag für die mit dem Kupplungsaufnahmeabschnitt 27 verbundene Kupplung 16. Vorzugsweise ist dieser Übergangsbereich stufenartig ausgeführt.

Zur Verbindung des Sensors mit dem Getriebe, insbesondere des Sensorgehäuses 17 mit dem Gehäuse 1 des Getriebes, weist die Sensoranordnung ein Plattenteil 8, ein Gehäuseteil 11 und ein Flanschteil 13 auf, die ein Kupplungsgehäuse bilden. Innerhalb des Kupplungsgehäuses ist die Kupplung 16 angeordnet. Die Kupplung 16 ist also gehäusebildend umgeben von dem Kupplungsgehäuse.

Die Kupplungswelle 6 ist durch eine Bohrung in dem Plattenteil 8 hindurchgeführt. Dabei ist in der Bohrung ein Wellendichtring 7 angeordnet. Der Wellendichtring 7 ist vorzugsweise als Radialwellendichtring ausgeführt und weist eine Dichtlippe auf. Die Dichtlippe läuft auf dem Laufflächenabschnitt 26 und dichtet die Kupplungswelle 6 zum Plattenteil 8 hin ab.

Die Kupplungswelle 6 ist durch eine Bohrung in dem Deckelteil 15 hindurchgeführt. Dabei ist das Deckelteil 15 zwischen dem Plattenteil 8 und dem Gehäuseteil 11 angeordnet. Mittels zumindest eines dritten Verbindungsmittels 10 ist das Gehäuseteil 11 mit dem Plattenteil 8 verbunden. Vorzugsweise ist das dritte Verbindungsmittel 10 als Schraube ausgeführt. Dabei ist das Deckelteil 15 zwischen dem Gehäuseteil 11 und dem Plattenteil 8 eingeklemmt. Vorzugsweise sind drei Schrauben in Umfangsrichtung des Plattenteils 8 um die Bohrung gleichmäßig verteilt angeordnet. Das Gehäuseteil 11 weist eine Bohrung auf zur Hindurchführung der Kupplungswelle 6.

Die Bohrung im Deckelteil 15 weist dabei einen größeren Radius auf als die Kupplungswelle 6. Dabei ist der Radius der Bohrung vorzugsweise so groß, dass die Kupplungswelle 6 und das beziehungsweise alle dritten Verbindungsmittel 10 in dieser Bohrung gemeinsam aufgenommen sind. Insbesondere sind dabei die Kupplungswelle 6 und/oder ein oder mehrere dritte Verbindungsmittel 10 radial beabstandet von der Wandung der Bohrung. Vorteilhafterweise ist die Bohrung so groß, dass das Plattenteil 8 und das mit diesem mittels des dritten Verbindungsmittels 10 verbundene Gehäuseteil 11 verschiebbar sind relativ zum Deckelteil, so lange noch das dritte Verbindungsmittel 10 nur leicht angezogen ist. Dann ist also Spiel in Verschieberichtung vorhanden zwischen dem dritten Verbindungsmittel 10 oder den dritten Verbindungsmitteln 10 und der Wandung der Bohrung. Somit ist bei der Montage die Zentrierung leicht ausführbar.

Mittels eines nicht dargestellten Montagehilfsmittels, das in die Bohrung in dem Gehäuseteil 11 eingesetzt wird, ist das Gehäuseteil 11 und insbesondere die Bohrung im Gehäuseteil 11 zur Drehachse 18 zentrierbar. Dabei wird das Montagehilfsmittel in einen Zwischenraum zwischen die Kupplungswelle 6 und die Wandung der Bohrung im Gehäuseteil 11 eingebracht. Das ausgerichtete Gehäuseteil wird mittels des dritten Verbindungsmittels 10 fest mit dem Plattenteil 8 und dem Deckelteil 15 verbunden und das Montagehilfsmittel entfernt.

Das Gehäuseteil 11 umgibt die Kupplung 16 zumindest teilweise gehäusebildend. Dabei verbindet die Kupplung 16 die Kupplungswelle 6 und die Sensorwelle 20. Die Kupplung 16 ist vorzugsweise als Klauenkupplung ausgeführt. Die Klauenkupplung weist zwei Kupplungsteile und ein sternförmig ausgeführtes Kunststoffteil auf, welches zwischen den Kupplungsteilen angeordnet ist und spielreduzierend und/oder dämpfend wirkt.

Das Sensorgehäuse 17 ist mittels zumindest eines ersten Verbindungsmittels 14 mit einem Flanschteil 13 verbunden. Vorzugsweise ist das erste Verbindungsmittel 14 als Schraube ausgeführt. Dabei sind vorzugsweise drei Schrauben in Umfangsrichtung gleichmäßig verteilt in dem Flanschteil 13 angeordnet.

Das Flanschteil 13 ist mittels zumindest eines zweiten Verbindungsmittels 12 mit dem Gehäuseteil 11 verbunden. Vorzugsweise ist das zweite Verbindungsmittel 12 als Schraube ausgeführt. Dabei sind vorzugsweise drei Schrauben in Umfangsrichtung gleichmäßig verteilt in dem Gehäuseteil 11 angeordnet.

In einem weiteren nicht dargestellten Ausführungsbeispiel weist der Übergangsbereich 28 vom Ausgleichsabschnitt 22 zur Fase 23 der Kupplungswelle 6 als Funktion der axialen Richtung einen polynomialen Verlauf auf. Vorzugsweise ist der Verlauf des Durchmessers des Übergangsbereichs 28 als Funktion der axialen Richtung als eine Polynomfunktion sechsten Grades ausgeführt.

In einem weiteren nicht dargestellten Ausführungsbeispiel weist der Übergangsbereich 28 vom Ausgleichsabschnitt 22 zur Fase 23 der Kupplungswelle 6 einen gerundeten Verlauf als Funktion der axialen Richtung auf. Vorzugsweise ist der Verlauf des Übergangsbereichs 28 in axialer Richtung glatt und/oder stetig differenzierbar angeschlossen an die Fase 23 und den Ausgleichsabschnitt 22. Insbesondere ist der Übergangsberiech 28 als Funktion der axialen Richtung stetig differenzierbar ausgeführt und/oder der Verlauf des Übergangsbereichs 28 ist in axialer Richtung S-förmig ausgeführt.

Das Verfahren zum Verbinden der Welle 5 mit der Sensorwelle 20 beinhaltet die folgenden Schritte, welche zeitlich nacheinander ausgeführt werden:
- Einführung einer Kupplungswelle 6 in eine Bohrung 19 in der Welle 5,
- Einschrauben eines Gewindeabschnitts 21 der Kupplungswelle in einen Gewindeabschnitt der Bohrung 19 mittels eines an einem Werkzeugaufnahmeabschnitt 24 angesetzten Werkzeugs, insbesondere eines Schraubenschlüssels, so dass die Welle 5 drehfest mit der Kupplungswelle 6 verbunden ist, dabei wird die Kupplungswelle 6 zur Drehachse 18 mittels einem als Fase ausgeführten Wellenabschnitt und einer Fase 23 auf der Kupplungswelle 6 auf die Drehachse 18 ausgerichtet, wobei sich ein Ausgleichsabschnitt 22 der Kupplungswelle 6 elastisch verformt,
- Einsetzen eines Wellendichtringes 7 in eine Bohrung in einem Plattenteil 8 und Einlegen eines Dichtringes 9 in eine Aussparung in dem Plattenteil 8,
- Verbinden des Plattenteils 8 mit einem Gehäuseteil 11 mittels zumindest eines dritten Verbindungsmittels 10, wobei ein Deckelteil 15 zwischen dem Gehäuseteil 11 und dem Plattenteil 8 leicht eingeklemmt wird, insbesondere spielbehaftetes Verbinden,
- Auffädeln des vormontierten Plattenteils 8 auf die Kupplungswelle 6,
- Einpressen des vormontierten Deckelteils 15 in eine ein Lager 4 der Welle 5 aufnehmende Stufenbohrung in einem Gehäuse 1, wobei die Kupplungswelle 6 durch die Bohrung hindurchgeführt ist,
- Ausrichtung des Gehäuseteils 11 zur Drehachse 18 mittels eines Montagehilfsmittels, wobei das dritte Verbindungsmittel 10 fixiert wird,
- Verbindung eines Sensorgehäuses 17 mit einem Flanschabschnitt 13 mittels zumindest eines ersten Verbindungsmittels 14,
- Verbindung der Kupplung mit einem Kupplungsaufnahmeabschnitt 27 der Kupplungswelle 6 und mit einer Sensorwelle 20,
- Verbindung des Flanschabschnitts 13 mit dem Gehäuseteil 11 mittels zumindest eines zweiten Verbindungsmittels 12.

In einem weiteren nicht dargestellten Ausführungsbeispiel wird Klebstoff in die Bohrung 19 eingebracht, bevor die Kupplungswelle 6 eingeschraubt wird. Vorzugsweise wird Klebstoff in einen Schraubverbindungsbereich der Bohrung eingebracht.

In einem weiteren nicht dargestellten Ausführungsbeispiel wird zuerst das vormontierte Deckelteil 15 in die Stufenbohrung ein dem Gehäuse 1 eingepresst und anschließend die Kupplungswelle 6 durch die Bohrungen in dem Gehäuseteil 11, dem Plattenteil 8 und dem Deckelteil 15 hindurchgeführt und in die Bohrung 19 eingefädelt und eingeschraubt. Danach wird das Gehäuseteil 11 mittels des Montagehilfsmittels parallel zur Drehachse ausgerichtet.

### Bezugszeichenliste

1 Gehäuse
2 Sicherungsring
3 Distanzring
4 Lager
5 Welle
6 Kupplungswelle
7 Wellendichtring
8 Plattenteil
9 Dichtring
10 drittes Verbindungsmittel
11 Gehäuseteil
12 zweites Verbindungsmittel
13 Flanschteil
14 erstes Verbindungsmittel
15 Deckelteil
16 Kupplung
17 Sensorgehäuse
18 Drehachse
19 Bohrung
20 Sensorwelle
21 Gewindeabschnitt
22 Ausgleichsabschnitt
23 Fase
24 Werkzeugaufnahmeabschnitt
25 Freistich
26 Laufflächenabschnitt
27 Kupplungsaufnahmeabschnitt
28 Übergangsbereich
29 Einfädelfase
30 Stufe

## Patentansprüche

1. Sensoranordnung zur Erfassung der Winkelstellung einer Welle (5), **dadurch gekennzeichnet, dass**
**die Sensoranordnung die Welle (5), eine Kupplungswelle (6), eine Kupplung (16) und einen Sensor, aufweisend eine Sensorwelle (20) und ein Sensorgehäuse (17), aufweist, wobei die** Sensorwelle (20) mittels **der** Kupplung (16) mit **der** Kupplungswelle (6) verbunden ist,
wobei die Kupplungswelle (6) mit der Welle (5) verbunden ist,
wobei die Kupplungswelle (6) in einem ersten axialen Abschnitt einen Gewindeabschnitt (21) und in einem zweiten axialen Abschnitt eine Fase (23) aufweist,
**wobei ein Ausgleichsabschnitt (22) axial zwischen dem Gewindeabschnitt (21) und der Fase (23) angeordnet ist,**
**wobei der minimale Radius des Ausgleichsabschnitts (22) kleiner ist als der minimale Radius des Gewindeabschnitts (21),**
**und wobei der minimale Radius des Ausgleichsabschnitts (22) kleiner ist als der minimale Radius der Fase (23),**
**wobei die Fase (23) der Kupplungswelle (6) eine Bohrung (19) in der Welle (5) berührt,**
**wobei die Bohrung (19) einen Gegengewindeabschnitt aufweist, welcher mit dem Gewindeabschnitt (21) schraubverbunden ist,**
**wobei der Ausgleichsabschnitt (22) mit Zugspannung beaufschlagt ist.**

2. Sensoranordnung nach **Anspruch 1,**
**dadurch gekennzeichnet, dass**
der Gewindeabschnitt (21) und die Fase (23) axial beabstandet voneinander sind.

3. Sensoranordnung nach mindestens einem der vorangegangenen Ansprüche,
**dadurch gekennzeichnet, dass**
der Gewindeabschnitt (21) an dem von der Sensorwelle (20) abgewandten axialen Endbereich der Kupplungswelle (6) angeordnet ist, wobei eine Einfädelfase (29) an den Gewindeabschnitt auf der von der Sensorwelle (20) abgewandten Seite angrenzt.

4. Sensoranordnung nach mindestens einem der vorangegangenen Ansprüche,
**dadurch gekennzeichnet, dass**
in der Bohrung (19) Klebstoff angeordnet ist, insbesondere im Schraubverbindungsbereich.

5. Sensoranordnung nach mindestens einem der vorangegangenen Ansprüche,
**dadurch gekennzeichnet, dass**
axial zwischen dem Gewindeabschnitt (21) und der Kupplung (16) der Ausgleichsabschnitt (22) der Kupplungswellenabschnitt mit dem kleinsten minimalen Radius ist,

6. **Sensoranordnung nach mindestens einem der vorangegangenen Ansprüche,**
**dadurch gekennzeichnet, dass**
der Gewindeabschnitt (21) als Drehmomenteinleitungsmittel fungiert für die Einleitung eines Drehmoments der Welle (5) in die Kupplungswelle (6),
wobei **ein** Kupplungsaufnahmeabschnitt (27) **der Kupplungswelle (6)** als Drehmomentausleitungsmittel fungiert für die Ausleitung des Drehmoments aus der Kupplungswelle (6) in die Sensorwelle (20),
wobei der Ausgleichsabschnitt (22) axial zwischen der Drehmomenteinleitung und der Drehmomentausleitung angeordnet **ist**,
wobei der minimale Radius des Ausgleichsabschnitts (22) kleiner ist als die Radien aller anderen axial zwischen dem Drehmomenteinleitungsmittel und dem Drehmomentausleitungsmittel angeordneten Axialabschnitte der Kupplungswelle (6).

7. **Sensoranordnung nach mindestens einem der vorangegangenen Ansprüche, dadurch gekennzeichnet, dass**
der Gewindeabschnitt (21) als Drehmomenteinleitungsmittel fungiert für die Einleitung eines Drehmoments der Welle (5) in die Kupplungswelle (6),
wobei der **ein** Kupplungsaufnahmeabschnitt (27) **der Kupplungswelle (6)** als Drehmomentausleitungsmittel fungiert für die Ausleitung des Drehmoments aus der Kupplungswelle (6) in die Sensorwelle (20),
wobei die Fase (23) axial zwischen der Drehmomenteinleitung und der Drehmomentausleitung angeordnet **ist.**

8. Sensoranordnung nach mindestens einem der vorangegangenen Ansprüche,
**dadurch gekennzeichnet, dass**
axial zwischen dem Ausgleichsabschnitt (22) und der Fase (23) ein Übergangsbereich (28) angeordnet ist,
wobei der Übergangsbereich (28) einen gerundeten Verlauf des Durchmessers als Funktion der axialen Länge aufweist,
wobei der Übergangsbereich (28) einen radialen, elliptischen oder polynomialen Verlauf des Durchmessers als Funktion der axialen Länge aufweist.

9. Sensoranordnung nach mindestens einem der vorangegangenen Ansprüche,
**dadurch gekennzeichnet, dass**
ein Sensorgehäuse (17) mittels zumindest eines ersten Verbindungsmittels (14) mit einem Flanschteil (13) verbunden ist
wobei das Flanschteil (13) eine Bohrung aufweist zur Hindurchführung der Sensorwelle (20).

10. Sensoranordnung nach **Anspruch 9,**
**dadurch gekennzeichnet, dass**
das Flanschteil (13) mittels zumindest eines zweiten Verbindungsmittels (12) mit einem Gehäuseteil (11) verbunden ist
wobei das Gehäuseteil (11) wellenseitig eine Bohrung aufweist zur Hindurchführung der Kupplungswelle (6),
wobei das Gehäuseteil (11) die Kupplung (16) zumindest teilweise gehäusebildend umgibt.

11. Sensoranordnung nach **Anspruch 10,**
**dadurch gekennzeichnet, dass**
das Gehäuseteil (11) mittels zumindest eines dritten Verbindungsmittels (10) mit einem Plattenteil (8) verbunden ist,
wobei axial zwischen dem Plattenteil (8) und dem Gehäuseteil (11) ein Deckelteil (15) angeordnet ist,
wobei das Deckelteil (15) eine Bohrung aufweist zur Hindurchführung der Kupplungswelle (6),
wobei die Bohrung in dem Deckelteil derart groß ausgeführt ist, dass die Kupplungswelle (6) und das oder alle dritten Verbindungsmittel (10) hindurchführbar sind durch die Bohrung, wobei Spiel vorgesehen ist zwischen der Bohrung und dem oder den dritten Verbindungsmitteln (10).

12. Sensoranordnung nach **Anspruch 11,**
**dadurch gekennzeichnet, dass**
das Plattenteil (8) wellenseitig einen Wellendichtring (7) aufweist,
wobei der Wellendichtring (7) eine Dichtlippe aufweist.

13. Sensoranordnung nach einem der Ansprüche **11 und 12,**
**dadurch gekennzeichnet, dass**
zwischen dem Plattenteil (8) und dem Deckelteil (15) ein Dichtring (9) angeordnet ist.

14. **Sensoranordnung nach mindestens einem der vorangegangenen** Ansprüche 11 bis 13,
**dadurch gekennzeichnet, dass**
das Deckelteil (15) in einer Bohrung mit einer Lageranordnung zur Lagerung der Welle (5) angeordnet ist.

15. Verfahren zum Verbinden einer Sensoranordnung zur Erfassung der Winkelstellung einer Welle (5) mit der Welle (5) aufweisend die folgenden Verfahrensschritte:
- in einem ersten Verfahrensschritt wird ein Plattenteil (8) mittels eines dritten Verbindungsmittels (10) mit einem Gehäuseteil (11) spielbehaftet verbunden, wobei ein Deckelteil (15) zwischen dem Plattenteil (8) und dem Gehäuseteil (11) mit einer ersten Klemmkraft eingeklemmt wird,
- in einem zweiten Verfahrensschritt wird das Deckelteil (15) in eine Bohrung des **eines** Gehäuses (1) eingepresst, wobei eine mit der Welle (5) drehfest verbundene Kupplungswelle (6) durch eine in dem Deckelteil (15) ausgeführte Ausnehmung und durch eine in dem Plattenteil (8) ausgeführte Ausnehmung und durch eine in dem Gehäuseteil (11) ausgeführte Ausnehmung hindurchgeführt wird,
- in einem dritten Verfahrensschritt werden das miteinander spielbehaftet verbundene Plattenteil (8) und Gehäuseteil (11) relativ zum Deckelteil (15) verschoben und mittels eines Montagehilfsmittels zur Drehachse (18) ausgerichtet,
- in einem vierten Verfahrensschritt wird das Plattenteil (8) mit dem Gehäuseteil (11) verbunden, wobei das Deckelteil (15) mit einer zweiten Klemmkraft eingeklemmt wird, wobei der zweite Klemmkraftbetrag größer ist als der erste Klemmkraftbetrag,
- in einem fünften Verfahrensschritt wird ein Sensorgehäuse (17) mit einem Flanschabschnitt (13) mittels zumindest eines ersten Verbindungsmittels (14) verbunden,
- in einem sechsten Verfahrensschritt wird eine Kupplung mit einem Kupplungsaufnahmeabschnitt (27) der Kupplungswelle (6) und mit einer Sensorwelle (20) verbunden,
- in einem siebten Verfahrensschritt wird der Flanschabschnitt (13) mit dem Gehäuseteil (11) mittels eines zweiten Verbindungsmittels (12) verbunden.

## Claims

1. Sensor arrangement for detecting the angle position of a shaft (5),
**characterized in that**
the sensor arrangement comprises the shaft (5), a coupling shaft (6), a coupling (16), and a sensor comprising a sensor shaft (20) and a sensor housing (17),
wherein the sensor shaft (20) is connected to the coupling shaft (6) by means of the coupling (16),
wherein the coupling shaft (6) is connected to the shaft (5), wherein the coupling shaft (6) has a threaded portion (21) in a first axial portion and has a bevel (23) in a second axial portion,
wherein a compensating portion (22) is arranged axially between the threaded portion (21) and the bevel (23),
wherein the minimum radius of the compensating portion (22) is smaller than the minimum radius of the threaded portion (21), and wherein the minimum radius of the compensating portion (22) is smaller than the minimum radius of the bevel (23), wherein the bevel (23) of the coupling shaft (6) makes contact with a bore (19) in the shaft (5),
wherein the bore (19) has a counter-threaded portion which is screw-connected to the threaded portion (21),
wherein tensile stress is applied to the compensating portion (22) .

2. Sensor arrangement according to claim 1,
**characterized in that**
the threaded portion (21) and the bevel (23) are at a distance from one another in the axial direction.

3. Sensor arrangement according to at least one of the preceding claims,
**characterized in that**
the threaded portion (21) is arranged on the axial end region of the coupling shaft (6) that is remote from the sensor shaft (20), an insertion bevel (29) adjoining the threaded portion on the side that is remote from the sensor shaft (20).

4. Sensor arrangement according to at least one of the preceding claims,
**characterized in that**
adhesive is arranged in the bore (19), in particular in the screw connection region.

5. Sensor arrangement according to at least one of the preceding claims,
**characterized in that**,
axially between the threaded portion (21) and the coupling (16), the compensating portion (22) is the coupling shaft portion with the smallest minimum radius.

6. Sensor arrangement according to at least one of the preceding claims,
**characterized in that**
the threaded portion (21) acts as a torque introduction means for introducing a torque of the shaft (5) into the coupling shaft (6),
wherein a coupling receiving portion (27) of the coupling shaft (6) acts as a torque discharge means for discharging the torque from the coupling shaft (6) into the sensor shaft (20), wherein the compensating portion (22) is arranged axially between the torque introduction and the torque discharge, wherein the minimum radius of the compensating portion (22) is smaller than the radii of all other axial portions of the coupling shaft (6) arranged axially between the torque introduction means and the torque discharge means.

7. Sensor arrangement according to at least one of the preceding claims,
**characterized in that**
the threaded portion (21) acts as a torque introduction means for introducing a torque of the shaft (5) into the coupling shaft (6),
wherein a coupling receiving portion (27) of the coupling shaft (6) acts as a torque discharge means for discharging the torque from the coupling shaft (6) into the sensor shaft (20), wherein the bevel (23) is arranged axially between the torque introduction and the torque discharge.

8. Sensor arrangement according to at least one of the preceding claims,
**characterized in that**
a transition region (28) is arranged axially between the compensating portion (22) and the bevel (23),
wherein the transition region (28) has a rounded curve of the diameter as a function of the axial length,
wherein the transition region (28) has a radial, elliptical or polynomial curve of the diameter as a function of the axial length.

9. Sensor arrangement according to at least one of the preceding claims,
**characterized in that**
a sensor housing (17) is connected to a flange part (13) by means of at least one first connecting means (14),
wherein the flange part (13) has a bore for the passage of the sensor shaft (20).

10. Sensor arrangement according to claim 9,
**characterized in that**
the flange part (13) is connected to a housing part (11) by means of at least one second connecting means (12),
wherein the housing part (11) has on the shaft side a bore for the passage of the coupling shaft (6),
wherein the housing part (11) surrounds the coupling (16) at least partially so as to form a housing.

11. Sensor arrangement according to claim 10,
**characterized in that**
the housing part (11) is connected to a plate part (8) by means of at least one third connecting means (10),
wherein a cover part (15) is arranged axially between the plate part (8) and the housing part (11),
wherein the cover part (15) has a bore for the passage of the coupling shaft (6),
wherein the bore in the cover part is designed to be large such that the coupling shaft (6) and the or all third connecting means (10) can pass through the bore, wherein play is provided between the bore and the one or more third connecting means (10).

12. Sensor arrangement according to claim 11,
**characterized in that**
the plate part (8) has on the shaft side a shaft sealing ring (7),
wherein the shaft sealing ring (7) has a sealing lip.

13. Sensor arrangement according to one of claims 11 and 12,
**characterized in that**
a sealing ring (9) is arranged between the plate part (8) and the cover part (15).

14. Sensor arrangement according to at least one of the preceding claims 11 to 13,
**characterized in that**
the cover part (15) is arranged in a bore with a bearing arrangement for bearing the shaft (5).

15. Method for connecting to a shaft (5) a sensor arrangement for detecting the angle position of the shaft (5), comprising the following method steps:
- in a first method step, a plate part (8) is connected with play to a housing part (11) by means of a third connecting means (10), wherein a cover part (15) is clamped with a first clamping force between the plate part (8) and the housing part (11),
- in a second method step, the cover part (15) is pressed into a bore of a housing (1), wherein a coupling shaft (6) that is connected to the shaft (5) in such a way as to rotate therewith is passed through an opening formed in the cover part (15) and through an opening formed in the plate part (8) and through an opening formed in the housing part (11),
- in a third method step, the plate part (8) and the housing part (11), which are connected to one another with play, are displaced relative to the cover part (15) and are aligned with the axis of rotation (18) by means of a mounting aid,
- in a fourth method step, the plate part (8) is connected to the housing part (11), wherein the cover part (15) is clamped with a second clamping force, wherein the magnitude of the second clamping force is greater than the magnitude of the first clamping force,
- in a fifth method step, a sensor housing (17) is connected to a flange portion (13) by means of at least one first connecting means (14),
- in a sixth method step, a coupling is connected to a coupling receiving portion (27) of the coupling shaft (6) and to a sensor shaft (20),
- in a seventh method step, the flange portion (13) is connected to the housing part (11) by means of a second connecting means (12).

## Revendications

1. Ensemble de détection dévolu au repérage de la position angulaire d'un arbre (5),
**caractérisé par le fait que**
ledit ensemble de détection comprend ledit arbre (5), un arbre d'accouplement (6), un accouplement (16) et un capteur muni d'un axe (20) et d'un boîtier (17),
l'axe (20) dudit capteur étant relié audit arbre d'accouplement (6) au moyen dudit accouplement (16),
lequel arbre d'accouplement (6) est relié audit arbre (5),
ledit arbre d'accouplement (6) étant pourvu d'une région filetée (21), sur un premier tronçon axial, et d'un chanfrein (23) sur un second tronçon axial,
une zone de compensation (22) étant interposée, dans le sens axial, entre ladite région filetée (21) et ledit chanfrein (23),
le rayon minimal de ladite zone de compensation (22) étant inférieur au rayon minimal de ladite région filetée (21),
et ledit rayon minimal de ladite zone de compensation (22) étant inférieur au rayon minimal dudit chanfrein (23),
un contact étant établi entre ledit chanfrein (23) de l'arbre d'accouplement (6) et un alésage (19) pratiqué dans l'arbre (5),
lequel alésage (19) comporte une région à filetage complémentaire reliée, par vissage, à ladite région filetée (21),
la zone de compensation (22) étant soumise à une contrainte de traction.

2. Ensemble de détection selon la revendication 1,
**caractérisé par le fait que**
la région filetée (21) et le chanfrein (23) sont mutuellement espacés dans le sens axial.

3. Ensemble de détection selon au moins l'une des revendications précédentes,
**caractérisé par le fait que**
la région filetée (21) est située dans la région extrême axiale de l'arbre d'accouplement (6) qui pointe à l'opposé de l'axe (20) du capteur, un chanfrein d'insertion (29) étant limitrophe de ladite région filetée du côté tourné à l'opposé dudit axe (20) du capteur.

4. Ensemble de détection selon au moins l'une des revendications précédentes,
**caractérisé par le fait**
**qu'**un adhésif est déposé dans l'alésage (19), en particulier dans la zone de liaison par vissage.

5. Ensemble de détection selon au moins l'une des revendications précédentes,
**caractérisé par le fait que**
la zone de compensation (22) constitue dans le sens axial, entre la région filetée (21) et l'accouplement (16), le tronçon de l'arbre d'accouplement qui présente le plus petit rayon minimal.

6. Ensemble de détection selon au moins l'une des revendications précédentes,
**caractérisé par le fait que**
la région filetée (21) remplit la fonction d'un moyen d'entrée de couple de rotation conçu pour introduire, dans l'arbre d'accouplement (6), un couple de rotation de l'arbre (5), sachant qu'une zone (27) de l'arbre d'accouplement (6), recevant l'accouplement, remplit la fonction d'un moyen de sortie de couple de rotation réalisé pour décharger, dans l'axe (20) du capteur, le couple de rotation émanant dudit arbre d'accouplement (6),
la zone de compensation (22) étant interposée, dans le sens axial, entre l'introduction du couple de rotation et la décharge dudit couple de rotation,
le rayon minimal de ladite zone de compensation (22) étant inférieur aux rayons de tous les autres tronçons axiaux dudit arbre d'accouplement (6) interposés, dans le sens axial, entre ledit moyen d'entrée du couple de rotation et ledit moyen de sortie dudit couple de rotation.

7. Ensemble de détection selon au moins l'une des revendications précédentes,
**caractérisé par le fait que**
la région filetée (21) remplit la fonction d'un moyen d'entrée de couple de rotation conçu pour introduire, dans l'arbre d'accouplement (6), un couple de rotation de l'arbre (5), sachant qu'une zone (27) de l'arbre d'accouplement (6), recevant l'accouplement, remplit la fonction d'un moyen de sortie de couple de rotation conçu pour décharger, dans l'axe (20) du capteur, le couple de rotation émanant dudit arbre d'accouplement (6),
le chanfrein (23) étant interposé, dans le sens axial, entre l'introduction du couple de rotation et la décharge dudit couple de rotation.

8. Ensemble de détection selon au moins l'une des revendications précédentes,
**caractérisé par le fait**
**qu'**une zone de transition (28) est interposée, dans le sens axial, entre la zone de compensation (22) et le chanfrein (23),
le diamètre de ladite zone de transition (28) présentant une allure arrondie en fonction de la longueur axiale,
ledit diamètre de la zone de transition (28) présentant une allure radiale, elliptique ou polynomiale en fonction de la longueur axiale.

9. Ensemble de détection selon au moins l'une des revendications précédentes,
**caractérisé par le fait**
**qu'**un boîtier (17) du capteur est relié à une partie de bridage (13) à l'aide d'au moins un premier moyen de liaison (14),
ladite partie de bridage (13) comportant un perçage dédié au passage de l'axe (20) dudit capteur.

10. Ensemble de détection selon la revendication 9,
**caractérisé par le fait que**
la partie de bridage (13) est reliée à une partie (11) formant boîtier, à l'aide d'au moins un deuxième moyen de liaison (12),
ladite partie (11) formant boîtier comportant, côté arbre, un perçage dédié au passage de l'arbre d'accouplement (6),
laquelle partie (11), formant boîtier, entoure au moins partiellement l'accouplement (16) avec formation d'un logement.

11. Ensemble de détection selon la revendication 10,
**caractérisé par le fait que**
la partie (11) formant boîtier est reliée à une partie (8) formant platine, à l'aide d'au moins un troisième moyen de liaison (10),
une partie (15) formant couvercle étant interposée, dans le sens axial, entre ladite partie (8) formant platine et ladite partie (11) formant boîtier,
ladite partie (15), formant couvercle, comportant un perçage dédié au passage de l'arbre d'accouplement (6),
lequel perçage, pratiqué dans ladite partie formant couvercle, est réalisé d'un dimensionnement tel que ledit arbre d'accouplement (6) et ledit troisième, ou tous les troisièmes moyens de liaison (10) puissent traverser ledit perçage, sachant qu'un jeu est prévu entre ledit perçage et ledit ou lesdits troisième(s) moyen(s) de liaison (10).

12. Ensemble de détection selon la revendication 11,
**caractérisé par le fait que**
la partie (8) formant platine est pourvue, côté arbre, une bague (7) d'étanchement dudit arbre,
laquelle bague (7) d'étanchement de l'arbre comporte une lèvre d'étanchement.

13. Ensemble de détection selon les revendications 11 et 12,
**caractérisé par le fait**
**qu'**une bague d'étanchement (9) est interposée entre la partie (8) formant platine et la partie (15) formant couvercle.

14. Ensemble de détection selon au moins l'une des revendications 11 à 13 précédentes,
**caractérisé par le fait que**
la partie (15), formant couvercle, est disposée dans un perçage doté d'un agencement affecté au montage de l'arbre (5).

15. Procédé pour relier, à un arbre (5), un ensemble de détection dévolu au repérage de la position angulaire dudit arbre (5), comprenant les étapes opératoires suivantes :
- au cours d'une première étape opératoire, une partie (8) formant platine est reliée à une partie (11) formant boîtier, à l'aide d'un troisième moyen de liaison (10), avec réservation d'un jeu, une partie (15) formant couvercle étant enserrée entre ladite partie (8) formant platine et ladite partie (11) formant boîtier, avec une première force de coincement,
- au cours d'une deuxième étape opératoire, ladite partie (15) formant couvercle est enchâssée à force dans un perçage d'un carter (1), un arbre d'accouplement (6), relié audit arbre (5) avec verrouillage rotatif, étant alors engagé à travers un évidement pratiqué dans ladite partie (15) formant couvercle, à travers un évidement ménagé dans ladite partie (8) formant platine et à travers un évidement façonné dans ladite partie (11) formant boîtier,
- au cours d'une troisième étape opératoire, ladite partie (8) formant platine et ladite partie (11) formant boîtier, reliées l'une à l'autre avec réservation d'un jeu, sont déplacées par rapport à ladite partie (15) formant couvercle et sont orientées, par rapport à l'axe de rotation (18), à l'aide d'un moyen de montage auxiliaire,
- au cours d'une quatrième étape opératoire, ladite partie (8) formant platine est reliée à ladite partie (11) formant boîtier, ladite partie (15) formant couvercle étant alors enserrée avec une seconde force de coincement, la valeur de ladite seconde force de coincement étant supérieure à la valeur de ladite première force de coincement,
- au cours d'une cinquième étape opératoire, un boîtier (17) de capteur est relié à une zone de bridage (13) à l'aide d'au moins un premier moyen de liaison (14),
- au cours d'une sixième étape opératoire, un accouplement est relié à une zone (27) de l'arbre d'accouplement (6) qui reçoit ledit accouplement, et à un axe (20) de capteur,
- au cours d'une septième étape opératoire, ladite zone de bridage (13) est reliée à ladite partie (11) formant boîtier, à l'aide d'un deuxième moyen de liaison (12).
